# EUROPÄISCHE PATENTSCHRIFT

(11) **EP 3 460 111 B1**
(45) Veröffentlichungstag und Bekanntmachung des Hinweises auf die Patenterteilung: **22.09.2021**
(21) Anmeldenummer: 18179722.6
(22) Anmeldetag: 26.06.2018
(51) Int. Cl.: D02G 3/48, D02G 3/26, D02G 3/28, B60C 9/00

(54) **VERSTÄRKUNGSCORD ZUR VERWENDUNG ALS FESTIGKEITSTRÄGER IN EINER GÜRTELBANDAGE UND/ODER KARKASSE EINES FAHRZEUGLUFTREIFENS**
REINFORCEMENT CORD FOR USE AS A SUPPORT IN A BELT AND/OR BODY OF A PNEUMATIC VEHICLE TYRE
CORDE DE RENFORT DESTINÉE À ÊTRE UTILISÉE COMME SUPPORT DE FIXATION DANS UN BANDAGE DE CEINTURE ET / OU D'UNE CARCASSE D'UN PNEU DE VÉHICULE AUTOMOBILE

(30) Priorität: 25.09.2017 DE 102017216883
(43) Veröffentlichungstag der Anmeldung: 27.03.2019
(73) Patentinhaber: Continental Reifen Deutschland GmbH, 30165 Hannover (DE)
(72) Erfinder: Reese, Wolfgang, 31228 Peine (DE)
(74) Vertreter: Continental Corporation

(56) Entgegenhaltungen:
- EP-A1- 0 296 093
- EP-A2- 2 604 448
- DE-A1-102011 053 264
- US-A- 3 253 638

## Beschreibung

Die Erfindung betrifft eine Verwendung einer Festigkeitsträgerlage, aufweisend einen Verstärkungscord aus zumindest zwei miteinander endverdrehten Garnen als Festigkeitsträger in einer Gürtelbandage eines Fahrzeugluftreifens, wobei die Garne innerhalb des Verstärkungscordes die gleiche Verdrehungszahl und Verdrehungsrichtung aufweisen und wobei die Garne in der entgegengesetzten Verdrehungsrichtung zum Verstärkungscord endverdreht sind und wobei die Verdrehungszahl der Garne größer ist als die Endverdrehungszahl des Verstärkungscordes und wobei die Garne eine Feinheit von mehr als 1200 dtex aufweisen, und wobei der Verstärkungscord ein Hybridcord aus zumindest zwei Garnen aus unterschiedlichem Material ist.

Ein "Garn" ist im Rahmen der vorliegenden Erfindung in Anlehnung an die DIN 60900 ein linienförmiges Gebilde, das aus mehreren einzelnen Filamenten, d.h. Endlosfasern, besteht. Die Filamente des Garns sind miteinander verdreht. Im Rahmen der vorliegenden Erfindung stellen "Corde" linienförmige Gebilde dar, die aus zwei oder mehr miteinander endverdrehten Garnen bestehen.

Um bei Fahrzeugluftreifen, insbesondere beim Hochgeschwindigkeitseinsatz, eine Erhebung des Reifens durch die im Fahrbetrieb auftretenden Fliehkräfte zu verhindern, ist es bekannt, bei einem Fahrzeugluftreifen, der im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort durch Umschlingen zugfester Wulstkerne verankert ist, einen radial außen befindlichen, Profilrillen aufweisenden Gummilaufstreifen und einen Gürtel zwischen dem Gummilaufstreifen und der Karkasse aufweist, eine Gürtelbandage vorzusehen. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger in Form von Corden, die in Gummi eingebettet sind.

Die Bandage wird bei der Reifenherstellung in Form von Lagen mit in eine unvulkanisierte Kautschukmischung eingebetteten Verstärkungscorden aufgebracht, die auf den Gürtel gewickelt oder gespult werden. Die Verstärkungscorde werden für solche Lagen in Kautschuk eingebettet, indem eine Schar von im Wesentlichen parallel liegenden Verstärkungscorden, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit einer Kautschukmischung durchläuft. Bei der Bombage und Vulkanisation des Reifens erhebt/dehnt sich der Reifen in der Regel im Schulterbereich bis 2 % und im Mittenbereich bis 4 % im Vergleich zum unvulkanisierten Rohling, wenn der Rohling auf einer flachen Trommel gewickelt wird.

Die Verstärkungscorde der Bandage sollen bei der Reifenherstellung eine ausreichende Erhebung bei der Bombage und in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit gewährleisten. Für die Hochgeschwindigkeitstauglichkeit ist eine hohe Umfangssteifigkeit des Reifens erforderlich, um auch bei hohen Geschwindigkeiten eine hohe Kurvensteifigkeit sicherzustellen.

Als Festigkeitsträger für die Bandage von Fahrzeugreifen werden unterschiedlichste Materialien, wie Polyamide, Rayon, Polyester und Hybride aus unterschiedlichen Materialien, eingesetzt. Verstärkungscorde für die Bandage von Fahrzeugreifen sind beispielsweise aus der WO 2017/048207 A1 bekannt. Die dort beschriebenen Corde bestehen aus Polyamidgarnen unterschiedlicher Feinheit, wobei der Unterschied zwischen der Vorverdrehungszahl der Polyamidcorde und der Verdrehungszahl der Corde maximal 20 % beträgt, ohne Aussage darüber, ob die Corde oder die Garne eine größere Verdrehungszahl aufweisen.

Die eingangs genannte Verwendung von Festigkeitsträgerlagen, die Verstärkungscorde aus zumindest zwei miteinander endverdrehten Garnen als Festigkeitsträger aufweisen, in einer Gürtelbandage eines Fahrzeugluftreifens sind bereits aus der DE 10 2011 053 264 bekannt. Weitere Verstärkungscorde für Fahrzeugluftreifen sind beispielsweise aus der EP 0 296 093 A1, der US 3,253,638 und der EP 2 604 448 A2 bekannt.

Die Corde für die Herstellung der Bandage werden üblicherweise symmetrisch gedreht/getwistet, da dies mit einem kostengünstigen Einstufen-Prozess auf so genannten Direktkablierern möglich ist. Dabei werden zunächst die für den Cord verwendeten Garne mit einer bestimmten Verdrehungszahl x in die eine Richtung (vor)verdreht und im Anschluss die Garne, in der Regel 2 oder 3, mit der identischen Verdrehungszahl x in entgegengesetzter Richtung zum Verstärkungscord endverdreht. Das Ergebnis ist ein Verstärkungscord, bei dem die Garne dann keine Drehung mehr aufweisen, da sie zurückgedreht wurden, und ein Kord mit x Verdrehungen. Infolge der Corddrehungen hat dieser das Bestreben, sich wieder aufzudrehen, d. h. er weist eine gewisse Drehspannung auf. Diese verbleibende Drehspannung macht sich besonders dann bemerkbar, wenn viele dünne Corde zu kalandriertem Gewebe verarbeitet werden. Durch die Vielzahl der Corde summieren sich die Drehspannungen auf und es kommt zu hochstehenden Schnittkanten im kalandrierten Gewebe, wodurch ein fehlerloses automatisiertes Aneinandersetzen von zugeschnittenen Bahnen des kalandrierten Gewebes nicht möglich ist. Gummierte, schmale, lange Streifen, wie sie für eine Spulbandage üblicherweise eingesetzt werden, haben das Bestreben, sich in Speicherschleifen zu drehen bzw. umzuschlagen oder sich zu falten.

Der Erfindung liegt die Aufgabe zu Grunde, einen ausbalancierten Verstärkungscord zur Verfügung zu stellen, der reduzierte Drehspannungen und eine hohe Ermüdungsbeständigkeit aufweist.

Gelöst wird die Aufgabe dadurch, dass die Verdrehungszahl der Garne um mehr als 10 % größer ist als die Endverdrehungszahl des Verstärkungscordes.

Auf diese Weise erhält man einen Verstärkungscord, der ein Garn mit einer entgegensetzten Restdrehung enthält, wodurch die Drehspannung des Verstärkungscordes reduziert wird. Die Schnittkanten eines kalandrierten Gewebes mit diesem Verstärkungscord stehen nicht hoch und lassen sich gut aneinandersetzen. Gummierte schmale Streifen mit diesem Verstärkungscord neigen nicht zum Drehen oder Umschlagen auf einer Speicherschleife.

Ein weiterer Vorteil dieser Verstärkungscorde ist, dass es möglich ist, die Kraft-/Dehnungseigenschaften nahezu auf gleichen Niveau zu halten, und die Ermüdungsbeständigkeit des Verstärkungscordes signifikant verbessert wird.

Bei den Verstärkungscorden kann es sich um solche mit zwei oder mehr, vorzugsweise 2 oder 3 (x2- oder x3-Konstruktion), Garnen handeln.

Ausgehend von einem Verstärkungscord mit gleichen Garn- und Cord-Verdrehungszahlen kann man den erfindungsgemäßen Verstärkungscord erhalten, in dem man entweder die (Vor-)Verdrehungszahl der Garne erhöht und die Endverdrehungszahl der Verstärkunsgcorde gleich belässt oder die (Vor-)Verdrehungszahl der Garne gleich belässt und die Endverdrehungszahl der Verstärkunsgcorde reduziert.

Die Garne innerhalb des Verstärkungscordes weisen die gleiche Verdrehungszahl und gleiche Verdrehungsrichtung auf, d. h. die Garne sind entweder bei mit der gleichen Verdrehungszahl in Z- oder in S-Richtung verdreht, wohingegen der Verstärkungscord entgegengesetzt, also in S- bzw. Z-Richtung, endverdreht ist.

Der Unterschied zwischen der Verdrehungszahl der Garne und der Verdrehungszahl des Cordes liegt außerhalb der üblichen Schwankungsbreite, die bei angestrebten gleichen Verdrehungszahlen von Garnen und Cord auftritt.

Einen besonders gut ausbalancierten Verstärkungscord mit hoher Ermüdungsbeständigkeit erhält man, wenn die Verdrehungszahl der Garne um mehr als 20 % größer ist als die Endverdrehungszahl des Verstärkungscordes.

Besonders positiv wirkt sich der erfindungsgemäße Unterschied in den Verdrehungszahlen des Verstärkungscordes bei solchen Corden aus, bei denen Garne mit einer Feinheit von mehr als 1200 dtex zu einem Cord verdreht sind.

Vorteilhaft ist es, wenn der Verstärkungscord einen Twistfaktor α von140 bis 260 aufweist. Der Twistfaktor α ist dabei definiert als α = Twist [t/m] · (Feinheit [tex]/ 1000)^{1/2}. Ein Verstärkungscord mit einem solchen Twistfaktor zeichnet sich durch ein Kraft-Dehnungs-Verhalten aus, das bei Verwendung der Festigkeitsträgerlage, insbesondere als Gürtelbandage in Fahrzeugluftreifen, einen problemlosen Reifenbau samt Vulkanisation ermöglicht und dem Reifen eine große Hochgeschwindigkeitstauglichkeit verleiht. Handelt es sich bei dem Verstärkungscord um einen mit Garnen aus Polyamid 6.6, ist der Twistfaktor α vorzugsweise 140 bis 160. Wird der Verstärkungscord aus einem Hybridgarn oder Polyester gebildet, ist der Twistfaktor α vorzugsweise 190 bis 210. Bei einem Verstärkungscord mit Garnen aus Rayon weist der Cord bevorzugt einen Twistfaktor α von 240 bis 260 auf.

Der Verstärkungscord kann aus Garnen mit Filamenten unterschiedlichsten Materials bestehen. So kann das Material der Filamente ausgewählt sein aus Stahl, Carbon, Glas, Basalt, Polyamid, Polyester oder Rayon. Das Garn kann aus Filamenten unterschiedlichen oder vorzugsweise gleichen Materials bestehen.

Bei den Filamenten aus Polyamid kann es sich um solche aus aromatischen Polyamiden, wie Aramid, oder solche aus aliphatischen Polyamiden, wie PA 4.6, PA 6, PA 6.6, PA 10.10, PA 11 und PA12, handeln.

Bei den Filamenten aus Polyester sich um solche aus Polyethylennaphthalat (PEN), Polyethylenfuranoat (PEF), Polybutylenterephthalat (PBT), Polybutylennaphttalat (PBN), Polypropylenterephthalat (PPT), Polypropylennaphthalat (PPN) oder Polyethylenterephthalat (PET) handeln. Bevorzugt handelt es sich um PET.

Gemäß einer bevorzugten Ausbildung der Erfindung ist zumindest eines der Garne des erfindungsgemäßen Verstärkungscordes ein Polyamidgarn, wie Aramid oder PA 6.6.

Bei Verwendung der Verstärkungscorde als Bandagenmaterial für Fahrzeugluftreifen ist der Cord ein Hybridcord aus zumindest zwei Garnen aus unterschiedlichem Material, vorzugsweise aus einem hochmoduligem und einem niedermoduligen Garn. Auf diese Weise kann der Reifenherstellung mit der Erhebung bei der Bombage und in der Vulkanisationsform Rechnung getragen werden und die Reifen zeichnen sich durch eine gute Hochgeschwindigkeitstauglichkeit aus.

Die Festigkeitsträger sind üblicherweise in einer Festigkeitsträgerlage parallel zueinander angeordnet und in elastomeres Material eingebettet, d. h. gummiert.

Die Festigkeitsträgerlage kann in unterschiedlichen elastomeren Erzeugnissen verwendet werden, wie z. B. in Schläuchen, Antriebsriemen, Fördergurten, Drucktüchern oder Luftfedern. Erfindungsgemäß wird die Festigkeitsträgerlage für Fahrzeugluftreifen verwendet. Der Fahrzeugluftreifen weist in der Regel eine ein- oder mehrlagige Karkasse, einen radial außerhalb der Karkasse angeordneten mehrlagigen Gürtel und eine den Gürtel radial außen abdeckende ein- oder mehrlagige Gürtelbandage auf. Die Festigkeitsträgerlage wird als Gürtelbandage eingesetzt.

Gemäß der Erfindung wird die Festigkeitsträgerlage als Gürtelbandage eines Fahrzeugluftreifens eingesetzt. Hier wirkt sich die stark reduzierte Drehspannung des Verstärkungscordes besonders positiv aus, da die gummierten Streifen für die Bandage nicht mehr das Bestreben aufweisen, sich in Speicherschleifen zu drehen bzw. umzuschlagen.

Die Erfindung soll nun anhand von Vergleichs- und Ausführungsbeispielen im Zusammenspiel mit der Tabelle 1 näher erläutert werden.

Es wurden Hybridcorde aus einem Aramidgarn mit der Feinheit 1680 dtex und einem PA 6.6-Garn mit der Feinheit 1400 dtex mit folgender Konstruktion (1680x1 + 1400x1)x2 näher untersucht, wobei die beiden Garne in Z-Richtung verdreht waren und der Cord in S-Richtung endverdreht. Die Verdrehungszahl der Garne wurde variiert und betrug 370, 420 und 470 t/m (Drehungen pro Meter), immer für beide Garne innerhalb eines Cordes gleich. Die beiden Garne wurden dann stets mit einer Endverdrehungszahl von 370 t/m zum Verstärkungscord endverdreht. Der Cord wies somit einen Twistfaktor α von 205 auf.

An den verschiedenen Corden wurde die Restdrehung (Rest-Torsion) pro Meter bestimmt, indem ein Cord frei hängend eingespannt wurde, wobei darauf zu achten ist, dass dabei kein Drehungsverlust entsteht. Das Cordende wurde mit einer Vorlast von 0,05 cN/dtex belastet. Dabei bezieht sich der dtex auf den Nominaltiter des Cordes. Anschließend wurde der Cord auf 1 m Länge gekürzt und danach ein freies Aufdrehen des Cordes unter der Vorlast ermöglicht und die Anzahl Umdrehungen bis zum Gleichgewicht bestimmt. Ferner wurden bei den verschiedenen Corden das Kraft-/Dehnungsverhalten bei Raumtemperatur gemäß ASTM D885/D885M und die Restfestigkeit bei Raumtemperatur nach alternierender Zug-/Druckbeanspruchung (alternierend zwischen 0,7 % Kompression und 5,5 % Kompression bzw. 2,4 % Zug und 2,4 % Kompression) gemäß ASTM D6588 als Maß für die Ermüdungsbeständigkeit bestimmt. Die Ergebnisse sind in der folgenden Tabelle 1 dargestellt, wobei die Corde 2 und 3 erfindungsgemäß ausgebildet sind.

**Tabelle 1**

| Eigenschaft | Cord 1 mit 370 t/m Gamverdrehung und 370 t/m Cordverdrehung | Cord 2 mit 420 t/m Gamverdrehung und 370 t/m Cordverdrehung | Cord 3 mit 470 t/m Gamverdrehung und 370 t/m Cordverdrehung |
|---|---|---|---|
| Rest-Torsion [rad] | 19 | 15 | 9 |
| Kraft bei 1% Dehnung [N] | 20 | 20 | 22 |
| Kraft bei 2% Dehnung [N] | 37 | 36 | 38 |
| Kraft bei 4% Dehnung [N] | 92 | 88 | 97 |
| Restfestigkeit nach 10,6 Mio Zyklen von 0,7 und 5,5 % Kompression [%] | 92 | 98 | 104 |
| Restfestigkeit nach 50 Mio Zyklen von 2,4 % Zug und 2,4 % Kompression [%] | 79 | 87 | 101 |

Der Cord 1 weist eine hohe Restdrehung und damit eine hohe Drehspannung auf und neigt bei Verwendung als schmaler gummierter Streifen für eine Gürtelbandage stark dazu, sich in Speicherschleifen einzudrehen und somit produktionstechnische Probleme zu bereiten. Bei den Corden 2 und 3 kann die Restdrehung durch die unterschiedlichen Verdrehungszahlen von Cord und Garn reduziert werden, so dass diese Corde als gummierte Streifen eine verringerte Neigung zum Eindrehen aufweisen. Anhand des Verhaltens des Kraft-/Dehnungsverhaltens der Corde wird deutlich, dass die Werte auf zumindest gleichem Niveau verbleiben. Die leicht erhöhte Kraft bei 4 % Dehnung bei Cord 3 ist bewirkt sogar eine Verbesserung der Hochgeschwindigkeitstauglichkeit des Reifens bei Verwendung als Gürtelbandage. Ebenfalls positiv zeigt sich das Verhalten der erfindungsgemäßen Verstärkungscorde im Hinblick auf die Ermüdungsbeständigkeit. Bei den erfindungsgemäßen Corden ist sie deutlich verbessert.

## Patentansprüche

1. Verwendung einer Festigkeitsträgerlage, aufweisend einen Verstärkungscord aus zumindest zwei miteinander endverdrehten Garnen als Festigkeitsträger in einer Gürtelbandage eines Fahrzeugluftreifens, , wobei die Garne innerhalb des Verstärkungscordes die gleiche Verdrehungszahl und Verdrehungsrichtung aufweisen und wobei die Garne in der entgegengesetzten Verdrehungsrichtung zum Verstärkungscord endverdreht sind und wobei die Verdrehungszahl der Garne größer ist als die Endverdrehungszahl des Verstärkungscordes und wobei die Garne eine Feinheit von mehr als 1200 dtex aufweisen und wobei der Verstärkungscord ein Hybridcord aus zumindest zwei Garnen aus unterschiedlichem Material ist,
**dadurch gekennzeichnet, dass** die Verdrehungszahl der Garne um mehr als 10 % größer ist als die Endverdrehungszahl des Verstärkungscordes.

2. Verwendung nach Anspruch 1, **dadurch gekennzeichnet, dass** die Verdrehungszahl der Garne um mehr als 20 % größer ist als die Endverdrehungszahl des Verstärkungscordes.

3. Verwendung nach Anspruch 1 oder 2, **dadurch gekennzeichnet, dass** der Verstärkungscord einen Twistfaktor von 140 bis 260 aufweist.

4. Verwendung nach zumindest einem der vorhergehenden Ansprüche, **dadurch gekennzeichnet, dass** zumindest eines der Garne ein Polyamidgarn ist.

## Claims

1. Use of a strength member ply comprising a reinforcement cord composed of at least two mutually end-twisted yarns as strength members in a belt bandage of a pneumatic vehicle tyre, wherein the yarns within the reinforcement cord have the same number of twists and the same twisting direction and wherein the yarns are end-twisted in the opposite twisting direction in comparison with the reinforcement cord and wherein the number of twists of the yarns is greater than the number of end twists of the reinforcement cord and wherein the yarns have a fineness of more than 1200 dtex and wherein the reinforcement cord is a hybrid cord composed of at least two yarns of different material,
**characterized in that** the number of twists of the yarns is more than 10% greater than the number of end twists of the reinforcement cord.

2. Use according to Claim 1, **characterized in that** the number of twists of the yarns is more than 20% greater than the number of end twists of the reinforcement cord.

3. Use according to Claim 1 or 2, **characterized in that** the reinforcement cord has a twist factor of 140 to 260.

4. Use according to at least one of the preceding claims, **characterized in that** at least one of the yarns is a polyamide yarn.

## Revendications

1. Utilisation d'une couche de renfort, comportant une corde de renfort pourvue d'au moins deux fils torsadés de bout en bout l'un avec l'autre comme renfort dans un bandage de ceinture d'un pneumatique de véhicule, les fils à l'intérieur de la corde de renfort ayant le même nombre de torsions et la même direction de torsion, et les fils étant torsadés de bout en bout dans le sens de torsion opposé au câble de renfort et le nombre de torsions des fils étant supérieur au nombre de torsions final du câble de renfort et les fils ayant une finesse de plus de 1200 dtex et le câblé de renfort étant un câble hybride pourvu d'au moins deux fils en matériaux différents, **caractérisé en ce que** le nombre de torsions des fils est supérieur de plus de 10 % au nombre de torsions final du câble de renfort.

2. Utilisation selon la revendication 1, **caractérisée en ce que** le nombre de torsions des fils est supérieur de plus de 20 % au nombre de torsions final du câble de renfort.

3. Utilisation selon la revendication 1 ou 2, **caractérisée en ce que** le fil de renfort a un facteur de torsion de 140 à 260.

4. Utilisation selon l'une au moins des revendications précédentes, **caractérisée en ce qu'**au moins un des fils est un fil de polyamide.
